# EUROPÄISCHE PATENTSCHRIFT

(11) **EP 1 558 956 B1**
(45) Veröffentlichungstag und Bekanntmachung des Hinweises auf die Patenterteilung: **05.08.2009**
(21) Anmeldenummer: 03757630.3
(22) Anmeldetag: 06.11.2003
(51) Int. Cl.: G02B 6/44

(54) **HOCHSPANNUNGSBAUTEIL MIT OPTISCHER FASER UND VERFAHREN ZU SEINER HERSTELLUNG**
HIGH-VOLTAGE COMPONENT WITH OPTICAL FIBRE AND METHOD FOR PRODUCTION THEREOF
COMPOSANT HAUTE TENSION FIBRES OPTIQUES ET PROC D DE FABRICATION DUDIT COMPOSANT

(30) Priorität: 07.11.2002 EP 02405960
(43) Veröffentlichungstag der Anmeldung: 03.08.2005
(73) Patentinhaber: ABB Research Ltd., 8050 Zürich (CH)
(72) Erfinder: BOHNERT, Klaus, CH-5452 Oberrohrdorf (CH); GABUS, Philippe, CH-5415 Nussbaumen (CH); BRÄNDLE, Hubert, CH-8102 Oberengstringen (CH)
(74) Vertreter: ABB Patent Attorneys
(86) Internationale Anmeldenummer: PCT/CH2003/000729
(87) Internationale Veröffentlichungsnummer: WO 2004/042445

(56) Entgegenhaltungen:
- EP-A- 0 907 084
- DE-C- 19 633 695
- US-A- 4 802 731
- US-B1- 6 215 940
- BOHNERT K ET AL: "TEMPERATURE AND VIBRATION INSENSITIVE FIBER-OPTIC CURRENT SENSOR" JOURNAL OF LIGHTWAVE TECHNOLOGY, IEEE. NEW YORK, US, Bd. 20, Nr. 2, Februar 2002 (2002-02), Seiten 267-276, XP001126277 ISSN: 0733-8724 in der Anmeldung erwähnt

## Beschreibung

### Technisches Gebiet

Die Erfindung bezieht sich auf das Gebiet Hochspannungstechnik. Sie bezieht sich auf ein Hochspannungsbauteil gemäss dem Oberbegriff des Patentanspruches 1 und auf ein Verfahren zur Herstellung eines Hochspannungsbauteils gemäss dem Oberbegriff des Patentanspruches *9*.

### Stand der Technik

In der Hochspannungstechnik gibt es eine Reihe von Anwendungen, bei denen man mit optischen Fasern einen grossen elektrischen Potentialunterschied überbrücken muss. Dies ist zum Beispiel bei Kommunikationssystemen in Hochspannungsanlagen oder auch bei faseroptischen Sensoren wie Strom-, Spannungs- und Temperatursensoren im Hochspannungsbereich der Fall. Ein Teil des Sensors, der Sensorkopf, befindet sich meist auf einem Hochspannungspotential. Eine Lichtquelle sowie ein elektronisches Detektionssystem des Sensors befinden sich meist auf Erdpotential. Die Verbindungsfasern zwischen diesen auf unterschiedlichen elektrischen Potentialen liegenden Teilen müssen derart verlegt werden, dass keine elektrischen Durchschläge auftreten können. Elektrische Durchschläge oder Entladungen könnten bei einer nicht fachgerechten Verlegung hervorgerufen werden, zum Beispiel durch eine Verschmutzung der Faser oder eines die Faser umgebenden und mechanisch schützenden Faserkabels. Insbesondere ist eine hohe Durchschlagsfestigkeit nur dann zu erreichen, wenn bei einem Verlegen der optischen Fasern keine grösseren Hohlräume innerhalb des Hochspannungsbauteils erzeugt werden, und wenn während einer geplanten Standzeit des Hochspannungsbauteils keine derartigen Hohlräume entstehen. Die Durchschlagsfestigkeit muss, je nach Betriebsspannung, für Wechselspannungen von permanent bis beispielsweise 500 kV und mehr sowie für kurzeitige Spannungsspitzen von beispielsweise bis zu etwa 2 MV gewährleistet sein.

In US 5'594'827 ist die Verlegung von optischen Fasern in einem Hochspannungsisolator beschrieben. Der Hochspannungsisolator besteht aus einem inneren, stangenförmigen Isolationskörper, welcher typischerweise aus faserverstärktem Kunststoff besteht. In die Oberfläche des Isolationskörpers ist eine spiralenförmige Nut eingebracht, welche von einem ersten zu einem zweiten Ende des Isolationskörper verläuft, und in welche die Faser eingelegt ist. Die Oberfläche des Isolators ist ferner mit einer Beschirmung aus einem Elastomer, typischerweise Silikon, versehen, welche den Kriechweg zwischen Hochspannungs- und Erdpotential wesentlich erhöht. Die Faser wird in das Elastomer eingepresst und ist dadurch von dem Elastomer umhüllt.

In US 6'215'940 ist ein weiterer Hochspannungsisolator mit einer optischen Faser offenbart. Der stangenförmige Isolationskörper ist hier mit einem Schrumpfschlauch umschlossen, welcher die spiralförmig um den Isolationskörper gewickelte Faser umgibt und an den Isolationskörper drückt. Die Faser ist ausserdem mit einem Silikon-Gel umgeben, um Hohlräume innerhalb des Schrumpfschlauchs zu vermeiden, so dass eine verbesserte Durchschlagsfestigkeit erreicht wird. Der Isolator kann zur weicheren Einbettung der Faser mit einer inneren Zwischenschicht aus einem Elastomer überzogen sein.

In EP 0'856'737 A1 ist ein magneto-optischer Stromsensor offenbart. Dieser Stromsensor beinhaltet einen Sensorkopf mit einer optischen Faser als Sensorspule. Diese optische Sensorfaser dient der Führung zirkularpolarisierten Lichts. Sie besteht aus einem magnetooptisch aktiven Material und darf nur eine sehr geringe lineare Doppelbrechung aufweisen. Optische Fasern weisen im allgemeinen eine Faserschutzhülle (fiber coating) auf, welcher meist aus einem Acrylat besteht. Bei Temperaturveränderungen kann sich diese Faserschutzhülle gegenüber der Faser leicht verformen und dadurch geringe Kräfte auf die Faser ausüben. Bei Fasern ohne intrinsische Doppelbrechung wie der genannten Sensorfaser kann dadurch eine unkontrollierte leichte Doppelbrechung der Faser hervorgerufen werden, wodurch die in der Sensorfaser propagierenden zirkular polarisierten Wellen und somit das Mess-Signal des Stromsensors beeinflusst wird.

In der genannten EP 0'856'737 A1 wird vorgeschlagen, die Faser von ihrer Faserschutzhülle zu befreien, um die genannten unerwünschten Beeinflussungen des Mess-Signals zu eliminieren. Um ausserdem eventuell in der nackten Faser noch vorhandene mechanische Spannungen, die ebenfalls zu einer unerwünschten Temperaturabhängigkeit des Mess-Signals führen können, zu eliminieren, und um die Faser praktisch völlig frei von Doppelbrechung zu machen, wird die Sensorfaser bei etwa 830°C getempert, nachdem sie als Spule aufgewickelt wurde. Eine nackte, von ihrer Faserschutzhülle befreite Faser ist extrem empfindlich bereits gegen kleine mechanische Kräfte und auch gegen chemische Einflüsse sowie gegen das Eindiffundieren von Wasserdampf in die Faser, welches die Faser brüchig machen kann. Diese hochempfindliche nackte Faser wird gemäss der genannten EP 0'856'737 A1

in eine Kapillare eingebracht, welche die Funktion der Faserschutzhülle übernimmt. Zum Schutz der Sensorfaser vor Feuchtigkeit und/oder chemisch aggressive Gasen wird die Kapillare gasdicht verschlossen und mit einem Schutzgas gefüllt. Für einen besseren mechanischen Schutz der Sensorfaser und um mit dem Sensor sicher hantieren zu können wird die nur wenige hundert Mikrometer Durchmesser messende Kapillare in eine Vergussmasse eingegossen. Auch während des Betriebs eines solchen Stromsensors überbrückt weder die Sensorfaser noch die Kapillare eine Potentialdifferenz.

Die oben genannten Hochspannungsisolatoren haben den Nachteil, dass die Auswahl der in ihnen einsetzbaren optischen Fasern stark eingeschränkt ist, da das Material der Faserschutzhülle mit dem sie umgebenden (Elastomer-) Material kompatibel sein muss. Denn wenn die Haftungseigenschaften zwischen Faserschutzhüllen-Material und umgebendem (Elastomer-) Material nicht gut sind, kommt es zu Ablösungen den Materialien voneinander und somit zu Hohlräumen, die zu Teilentladungen und Durchschlägen führen. Auch ist schon bei der Herstellung eines solchen Hochspannungsbauteils nicht immer eine sichere Vermeidung von grösseren Hohlräumen und somit eine ausreichend grosse Durchschlagsfestigkeit gewährleistet. Weiterhin sind polarisationserhaltende Fasern, welche durch grosse Kräfte in ihren optischen Eigenschaften verändert werden können, nicht optimal vor der Einwirkung derartiger Kräfte geschützt. Das Elastomer-Material würde für polarisationserhaltende Fasern unzulässig hohe Kräfte auf die Faser ausüben. In dem Fall ist somit eine sichere Übertragung polarisierten Lichts nicht gewährleistet.

Weiterhin ist aus der EP 0 907 084 A2 ein Hochspannungssensor bekannt, bei dem eine Glasfaser und Abstandselemente mit einem Durchmesser von 40 -75 cm mittels Polyurethan in einem Isolierrohr aus faserverstärktem Kunststoff vergossen werden. Das Isolierrohr ist zur Verlängerung des Kriechweges zwischen Erd-und Hochspannungspotential mit einem gerippten Silikonschirm vergossen. Polyurethan- und Silikonverguss härten bei Raumtemperatur aus, wodurch mechanischer Stress vermieden wird.

Aus der US 4 802 731 ist ein Hochspannungsisolator bekannt, in welchem zwischen Erd-und Hochspannungspotential eine optische Glasfaser gezogen wird. Das Isolierrohr wird äusserlich von einem geripptem Silikonschirm umgeben ist. Die optische Glasfaser winded sich spiralförmig um das Isolierrohr und ist in das Silikonmaterial eingebettet oder wird in einem Rohr aus elektrisch isolierendem Material geführt, welches dann selber in den Silikonschirm eingebettet wird.

In der DE 196 33 695 C ist ein Verfahren zur Herstellung eines gewickelten Isolierrohres mit integrierten Kanälen zum nachträglichen Einziehen von Lichtwellenleitern offenbart. Auf einen gewickelten Hohlzylinder wird dazu eine elastische Matte gewickelt, welche in Längsrichtung des Hohlzylinders Leerrohre für die Aufnahme der Lichtwellenleiter aufweist. Je nach Wickelart können sich die Leerohre auch spiralförmig um den Zylinder winden. Um die Matte werden anschliessend weitere Lagen des Wickelmaterials aufgebracht, bis die Enddicke des Isolierrohrs erreicht ist.

In K. Bohnert et al, 'Temperature and Vibration insensitive Fiber-Optic Curren Sensor' Journal of Lightwave Technology, ISSN: 0733-8724 wird ein optischer Stromsensor mit einer hohen Temperaturstabilität offenbart, bei dem der ringförmige Messkopf über den zu messenden stromführenden Leiter geschoben wird. Somit befindet sich der Strommesskopf auf einem Potentialniveau. In das Gehäuse des Messkopfes ist eine Quarzkapillare in Silikon eingebettet, welche die ringförmige optische Faser führt.

### Darstellung der Erfindung

Es ist deshalb Aufgabe der Erfindung, ein Hochspannungsbauteil der eingangs genannten Art zu schaffen, welches die oben genannten Nachteile nicht aufweist. Weiter ist es Aufgabe der Erfindung, ein entsprechendes Herstellungsverfahren für ein solches Hochspannungsbauteil zu schaffen. Insbesondere soll das Hochspannungsbauteil für den Einsatz jedweder optischer Fasern geeignet sein, unabhängig vom Material und Typ der Faser respektive der Faserschutzhülle, und doch eine lange Standzeit haben.

Diese Aufgabe löst ein Hochspannungsbauteil mit den Merkmalen des Patentanspruches 1 und ein Herstellungsverfahren gemäss Patentanspruch *9*.

Das erfindungsgemässe Hochspannungsbauteil mit einem ersten Ende und einem zweiten Ende, wobei im Betriebsfall das erste Ende gegenüber dem zweiten Ende auf einem Hochspannungspotential liegt,
- mit einem Isolierteil, welches zwischen dem ersten Ende und dem zweiten Ende angeordnet ist, und
- mit einer optischen Faser, welche in das Hochspannungsbauteil integriert ist und sich von dem ersten Ende zu dem zweiten Ende erstreckt,
   wobei
- das Hochspannungsbauteil eine Kapillare aufweist, welche sich von dem ersten Ende zu dem zweiten Ende erstreckt und innerhalb des Isolierteils angeordnet ist, und wobei
- der Innendurchmesser der Kapillare grösser ist als der Aussendurchmesser der Faser, und wobei
- innerhalb der Kapillare die Faser angeordnet ist,
- die Kapillare ein Schutzmedium enthält zur Erzielung einer für den Betriebsfall geeigneten Durchschlagsfestigkeit in der Kapillare und
- dass die Kapillare zum Schutz der Kapillare vor mechanischem Stress aussen von einer Kapillarenummantelung umgeben ist und dass die Kapillare derart ausgebildet und in dem Isolierteil angeordnet ist, dass thermo-mechanischer Stress, der während eines Aushärtevorgangs des Isolierteils von dem Isolierteil auf sie ausgeübt wird, sie unbeschädigt lässt.

Das erfindungsgemässe Hochspannungsbauteil weist also eine Kapillare zur Aufnahme der optischen Faser auf, wobei die Kapillare innerhalb des Isolierteils des Hochspannungsbauteils angeordnet ist und für eine hohe Durchschlagsfestigkeit mit einem Schutzmedium gefüllt ist. Das Isolierteil kann typischerweise eine Beschirmung sein, beispielsweise aus Silikon.

Dadurch wird die Faser nicht dem direkten Kontakt mit Materialien des Isolierteils ausgesetzt, so dass die Art der Faser und die Art der Faserschutzhülle unabhängig von den Materialien des Isolierteils gewählt werden kann. Trotzdem wird eine grosse Durchschlagsfestigkeit erzielt. Hohlräume und Durchschläge in Fasernähe können sehr gut vermieden werden. Die Faser ist zudem sehr gut vor grossen, durch den Isolierteil ausgeübten thermo-mechanischen Kräften geschützt. Temperaturschwankungen, beispielsweise aufgrund der Tageszeiten oder Jahreszeiten, bedingen aufgrund von unterschiedlichen thermischen Ausdehnungskoeffizienten der Materialien derartige Kräfte. Lichtverluste bei der Führung von Licht in der Faser 4 durch derartige Kräfte, auch als Microbending-Effekte bezeichnet, werden vermieden oder zumindest verringert.

*D*ie Kapillare *ist* aussen von einer Kapillarenummantelung umgeben. Diese besteht vorzugsweise aus einem temperaturbeständigen Material. Dadurch ist die Kapillare mechanisch geschützt. Kräfte, welche auf die Kapillare ausgeübt werden, werden gleichmässiger über die Kapillare verteilt und geschwächt. Die Kapillarenummantelung dient dem mechanischen Schutz der Kapillare, unter anderem während des Einbaus in das Hochspannungsbauteil. Eine grössere Betriebssicherheit und Lebensdauer wird durch die Kapillarenummantelung erreicht.

*W*eiter *hin* ist die Kapillare derart ausgebildet und in dem Isolierteil angeordnet, dass thermo-mechanischer Stress die Kapillare unbeschädigt lässt. Bei diesem thermo-mechanischen Stress handelt es sich vor allem um thermo-mechanischen Stress, der im Betriebsfall oder während eines Aushärtevorgangs des Isolierteils von dem Isolierteil auf die Kapillare ausgeübt wird. Durch entsprechende Wahl des Materials, der Materialstärke und der Geometrie, insbesondere der Wandstärke der Kapillare, sowie durch eine geeignete Verlegung der Kapillare in dem Isolierteil kann dies erreicht werden. Eine grosse Betriebssicherheit und Lebensdauer wird dadurch erreicht.

*D*ie Faser *ist* eine polarisationserhaltende Faser. Insbesondere hat die Faser einen elliptischen Kern oder einen inneren elliptischen Mantel, oder die Faser ist eine Bowtie-Faser oder eine Panda-Faser. Derartige Fasern bewahren aufgrund ihrere starken intrinsischen Doppelbrechung in hohem Masse die Polarisation von in ihnen sich ausbreitenden linear polarisierten Lichtwellen. In verschiedenen Anwendungen ist im Polarisationszustand der Lichtwellen Information kodiert. Insbesondere in der Sensorik ist eine störungsfreie Übertragung des Polarisationszustandes für die Stabilität von Sensorsignalen wichtig. Störungen des Polarisationszustandes sind unerwünscht. Durch starke äussere mechanische Krafteinwirkung auf eine polarisationserhaltende Faser kann es zu Veränderungen der Doppelbrechung der Faser kommen, so dass sie nicht mehr so gut polarisationserhaltend ist und die genannten Störungen bei der Signalübertragung auftreten können. Mittels der Kapillare können derartige Krafteinwirkungen verhindert werden. Eine sichere Übertragung von polarisiertem Licht und eventuell entsprechend kodierten Informationen ist damit gewährleistet.

In einer weiteren bevorzugten Ausführungsform des Erfindungsgegenstandes weist die Faser eine Faserschutzhülle auf. Diese schützt die Faser vor ungewollten chemischen und mechanischen Einflüssen. Durch der Anodnung der Faser in der Kapillare kann ein Faserschutzhüllen-Material gewählt werden, ohne dass auf eine Materialkompatibilität mit Materialien des Isolierteils, vor allem bezüglich Oberflächen- und Haftungseigenschaften, Rücksicht genommen werden müsste.

In einer weiteren bevorzugten Ausführungsform des Erfindungsgegenstandes ist die Faser auswechselbar, ohne dass das Isolierteil dafür verändert werden müsste. Dies ermöglicht einen flexibleren Einsatz des Hochspannungsbauteils und eine verbesserte Reparierbarkeit.

In einer weiteren bevorzugten Ausführungsform des Erfindungsgegenstandes weist das Hochspannungsbauteil einen sich von dem ersten Ende zu dem zweiten Ende erstreckenden Isolationskörper auf, entlang dessen die Kapillare spiralförmig (wendelartig) angeordnet ist. Der Isolationskörper kann typischerweise ein stangenförmiger glasfaserverstärkter Epoxid-Körper sein, der die zwei Enden des Hochspannungsbauteils miteinander verbindet, wobei an den Enden jeweils eine Armatur angeordnet ist. Der Isolationskörper dient der mechanischen Stabilisierung des Hochspannungsbauteils. Die Kapillare ist ausserhalb oder innerhalb des Isolationskörpers derart angeordnet, dass sie dort im wesentlichen eine Spiralbahn beschreibt, die im wesentlichen entlang einer Fläche des Isolationskörpers von dem ersten Ende zu dem zweiten Ende verläuft. Dadurch kann eine verbesserte Durchschlagsfestigkeit erreicht werden. Auch wird eine längere Standzeit des Hochspannungsbauteils erreicht, da die Kapillare durch die spiralförmige Anordnung weniger starken mechanischen Belastungen ausgesetzt ist.

Die Kapillare kann in direktem Kontakt mit dem Isolationskörper sein, oder es kann auch eine Zwischenschicht zwischen dem Isolationskörper und der Kapillare vorgesehen sein, welche vorteilhaft weich ausgebildet ist, also eine geringe Shore-Härte aufweist. Dies führt ebenfalls zu einer weniger starken mechanischen Belastung der Kapillare und einer längeren Standzeit des Hochspannungsbauteils. Vorteilhaft wird der Isolationskörper mit der Zwischenschicht ummantelt, bevor die Kapillare am Isolationskörper angeordnet wird.

In einer weiteren bevorzugten Ausführungsform des Erfindungsgegenstandes weist das Hochspannungsbauteil einen Stromsensor und einen Spannungssensor auf. Diese können beispielsweise elektro-optisch, magneto-optisch oder piezo-optisch arbeiten. Durch eine Sensor-Integration kann ein verbessertes, weil mit integrierten Sensorik-Funktionen ausgestattetes Hochspannungsbauteil realisiert werden. Insbesondere sind faseroptische Sensoren vorteilhaft, da die Übertragung der optischen Signale dank der optischen Faser und der Kapillare sehr einfach zu realisieren sind.

In weiteren bevorzugten Ausführungsformen des Erfindungsgegenstandes ist das Isolierteil eine Beschi*r*mung und/oder eine Isolier-Füllung und/oder ein Isolierkörper.

Das erfindungsgemässe Verfahren zur Herstellung eines Hochspannungsbauteils mit einem ersten Ende und einem zweiten Ende, wobei im Betriebsfall das erste Ende gegenüber dem zweiten Ende auf einem Hochspannungspotential liegt, und mit einem Isolierteil, welches zwischen dem ersten Ende und dem zweiten Ende angeordnet ist,
- zwischen dem ersten Ende und dem zweiten Ende innerhalb des Isolierteils eine Kapillare zur Aufnahme einer optischen Faser angeordnet wird, und
- in die Kapillare ein Schutzmedium eingebracht wird zur Erzielung einer für den Betriebsfall geeigneten Durchschlagsfestigkeit in der Kapillare.

Es wird also eine Kapillare in das Isolierteil eingebracht, wobei die Kapillare zur Aufnahme einer optischen Faser geeignet ist. Und in die Kapillare wird ein Schutzmedium eingebracht, das zur Erzielung einer für den Betriebsfall geeigneten Durchschlagsfestigkeit in der Kapillare geeignet ist.

Auf diese Weise kann ein betriebssicheres Hochspannungsbauteil hergestellt werden, das mit einer optischen Faser ausrüstbar ist, wobei die Faser nicht dem direkten Kontakt mit Materialien des Isolierteils des Hochspannungsbauteils ausgesetzt ist, so dass die Art der Faser und die Art der Faserschutzhülle von den Materialien des Isolierteils unabhängig gewählt werden kann.

*Bei* de*m* erfindungsgemässen Herstellungsverfahrens wird die Faser in die Kapillare eingebracht. So wird ein durchschlagsfestes und verbessertes, mit der Funktion der optischen Signalübertragung versehenes Hochspannungsbauteil herstellbar. Weil die Faser nicht dem direkten Kontakt mit Materialien des Isolierteils des Hochspannungsbauteils ausgesetzt ist, kann das Material der Faser unabhängig vom Material des Isolierteils gewählt werden.

### Weiterhin wird bei

de *m* erfindungsgemässen Herstellungsverfahren die Kapillare äusserlich mit einer Kapillarenummantelung versehen, bevor die Kapillare innerhalb des Isolierteils angeordnet wird. Dadurch wird die Kapillare mechanisch geschützt, und es wird auf einfache Weise eine radial vollständige Ummantelung der Kapillare erreicht. Kräfte, welche auf die Kapillare ausgeübt werden, werden gleichmässiger über die Kapillare verteilt und geschwächt. Eine grössere Betriebssicherheit und längere Lebensdauer wird erreicht.

*D*ie Kapillare bereits vor einem Aushärtevorgang des Isolierteils innerhalb des Isolierteils angeordnet. Dadurch kann eine günstige und für viele Hochspannungsbauteile geeignete Herstellung erreicht werden, da Standard-Prozesse wie das Aushärten des Isolierteils verwendet werden können. Und die Kapillare ist in dem Isolierteil mechanisch sicher fixiert. Die Faser kann vor oder nach dem Aushärten des Isolierteils in die Kapillare eingebracht werden.

Es können durchschlagsfeste Hochspannungsbauteile mit langer Standzeit realisiert werden, die optische Fasern zur Signalübertragung aufweisen können, wobei die Fasern in der Materialwahl unabhängig von dem Material des Isolierteils wählbar sind.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Fig. 1: Hochspannungsisolator, geschnitten, schematisch;
- Fig. 2: Detail-Schnitt eines Hochspannungsbauteils im Bereich der Kapillare, geschnitten, schematisch;
- Fig. 3: Hochspannungsisolator mit elektro-optischem Spannungssensor, geschnitten, schematisch.

Die in den Zeichnungen verwendeten Bezugszeichen und deren Bedeutung sind in der Bezugszeichenliste zusammengefasst aufgelistet. Grundsätzlich sind in den Figuren gleiche oder zumindest gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

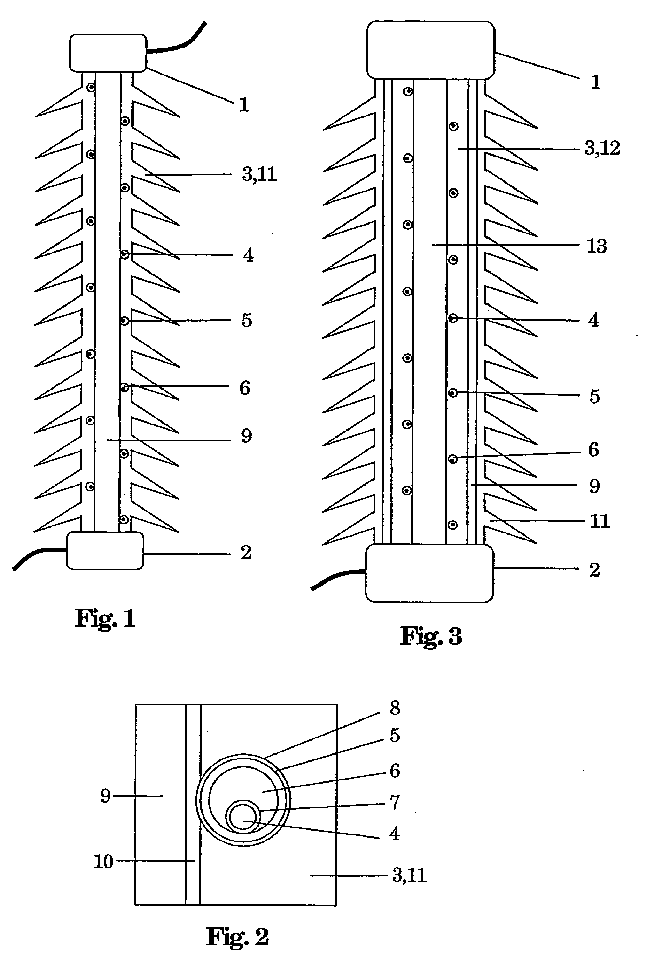

Fig. 1 zeigt schematisch und geschnitten ein erfindungsgemässes Hochspannungsbauteil. Das Hochspannungsbauteil ist ein Hochspannungsisolator mit einem ersten Ende 1 und einem zweiten Ende 2. Im Betriebsfall befindet sich das erste Ende 1 auf einem elektrischen Hochspannungspotential, während das zweite Ende 2 auf Erdpotential ist. Die beiden Enden 1,2 sind mit Armaturen versehen. Zwischen den Enden 1,2 ist ein Isolationskörper 9 angeordnet, welcher die Form eines zylindrischen Stabes aufweist. Eine solche Isolatorstange 9 dient der elektrisch isolierenden Beabstandung der beiden auf verschiedenen elektrischen Potentialen befindlichen Enden 1,2 und der mechanischen Stabilisierung der Anordnung. Sie ist vorzugsweise aus einem faserverstärktem Kunstharz, insbesondere aus einem faserverstärkten Epoxidharz.

Die Isolatorstange 9 ist umgeben von einem Isolierteil 3, welcher hier mit einer Beschirmung 11 identisch ist. Die Beschirmung 11 ist typischerweise aus Silikon. Sie dient der Verlängerung des Kriechweges, was insbesondere bei Hochspannungsbauteilen, die Witterungseinflüssen ausgesetzt sind, wünschenswert ist. In dem Isolierteil 3 befindet sich eine Kapillare 5, welche vorteilhaft um die Isolatorstange 9 in Form einer Wendel oder Spirale herumgewunden ist. Die Kapillare 5 umgibt die Isolatorstange 9 vorteilhaft spulenförmig oder spiralförmig. Sie besteht vorzugsweise aus Quarzglas. Die Kapillare ist vorteilhaft derart ausgebildet und in dem Isolierteil angeordnet, dass thermo-mechanischer Stress, der im Betriebsfall von dem Isolierteil auf sie ausgeübt wird, sie unbeschädigt lässt. Dies kann erreicht werden durch eine entsprechende Materialwahl, und indem die Geometrie der Kapillare, insbesondere ihre Wandstärke, entsprechend gewählt wird. Vorzugsweise weist die Kapillare 5 einen runden Querschnitt auf.

Innerhalb der Kapillare 5 ist eine optische Faser 4 angeordnet. Die Faser 4 dient der optischen Informationsübermittlung über ein Hochspannungspotential hinweg. An den Armaturen an den Enden 1,2 sind weiterführende Kabel angedeutet. Ausser der Faser 4 enthält die Kapillare 5 auch noch ein Schutzmedium 6. Das Schutzmedium 6 dient der Erhöhung der Durchschlagsfestigkeit des Hochspannungsbauteils. Es kann dafür beispielsweise trockener Stickstoff oder ein Transformator-Öl oder auch ein dielektrisches Gel wie Silikon-Gel verwendet werden. Damit das Schutzmedium 6 nicht aus der Kapillare 5 entweichen kann, ist die Kapillare 5 an ihren Enden verschlossen (nicht dargestellt). Durch ein Versiegeln der Enden der Kapillare 5 wird auch das Eindringen von Feuchtigkeit in die Kapillare 5 vermieden, was vorteilhaft ist, da eindringende Feuchtigkeit einerseits die Durchschlagsfestigkeit verringern könnte und andererseits die Kapillare von innen angreifen könnte. Eine unverschlossene Kapillare 5 ist aber auch denkbar, insbesondere wenn die Faser 4 eine Faserschutzhülle aufweist, und wenn keine hohe Luftfeuchtigkeit in die Kapillare 5 eindringen kann.

Zur Herstellung des in Fig. 1 dargestellten Hochspannungsisolators wird gegebenenfalls zunächst der Isolationskörper 9 an den Enden 1,2 mit Befestigungsmöglichkeiten für die Armaturen versehen. Dann wird die optische Faser 4 in die Kapillare 5 eingeführt. Danach wird die Kapillare 5 um den Isolationskörper 9 gewickelt, so dass sie sich von dem ersten Ende 1 bis zu dem zweiten Ende 2 erstreckt. Gegebenenfalls wird die Kapillare auch noch auf dem Isolationskörper 9 fixiert. Dann wird vorteilhaft das Schutzmedium 6 in die Kapillare eingebracht und die Kapillare gasdicht verschlossen. Danach wird die Isolatorstange 9 mitsamt der die Faser 4 beinhaltenden Kapillare 5 in eine vorzugsweise evakuierte Vergussform (nicht dargestellt) gelegt, welche dann unter Vermeidung von Lufteinschlüssen mit flüssigem Silikon für die Beschirmung 11 gefüllt, wird. Das Silikon muss danach ausgehärtet werden, was typischerweise durch etwa 30-minütiges Aufheizen auf etwa 150°C geschieht. Bei einem solchen Aufheizvorgang und vor allem bei dem anschliessenden Abkühlvorgang entsteht grosser thermo-mechanischer Stress in dem Hochspannungsbauteil. Das Einfüllen des Schutzmediums 6 kann gegebenenfalls auch erst nach dem Eingiessen des Isolationskörpers 9 und der Kapillare 5 mit dem Beschirmungsmaterial vorgenommen werden.

Die Länge eines Hochspannungsbauteils hängt von der Spannung ab, für die das Hochspannungsbauteils ausgelegt ist. Sollen beispielsweise Spannungen von 145 kV von dem ersten Ende 1 eines Hochspannungsbauteils zu dem zweiten Ende 2 abfallen, so wird eine Länge zwischen den beiden Enden 1,2 von etwa 1.4 m gewählt.

Fig. 2 zeigt schematisch und geschnitten einen Detail-Ausschnitt aus einem Hochspannungsbauteil, das dem in Fig. 1 dargestelltem Aufbau ähnlich ist.

Zwischen dem Isolationskörper 9 und dem als Beschirmung 11 dienenden Isolierteil 3 ist eine Zwischenschicht 10 aus einem weichen Kunststoff, beispielsweise Silikon, angeordnet. Die Zwischenschicht 10 dient der Verringerung von auf die Kapillare 5 wirkendem thermo-mechanischem Stress. Ebenfalls dem mechanischen Schutz der Kapillare 5 dient eine Kapillarenummantelung 8. Diese ummantelt die Kapillare 5 der Länge nach. Sie besteht aus einem Dielektrikum, vorzugsweise einem Polyimid. Sie weist typischerweise eine Wandstärke zwischen 5 µm und 50 µm auf. Die Kapillarenummantelung 8 dient ausserdem noch einem verbesserten Haftungsvermögen zwischen der Kapillare 5 (genauer: der Kapillarenummantelung 8) und dem sie umgebenden Material, also dem Material, aus dem das Isolierteil 3 besteht. Auch kann die Kapillarenummantelung vorteilhaft derart gewählt werden, dass sie bei einem Eingiessen in das Isolierteil-Material gute Benetzungseigenschaften aufweist, so dass hohlraumfreie Kontaktflächen entstehen. Mittels einer geeignet gewählten Kombination des Materials der Kapillarenummantelung 8 und des Materials des Isolierteils 3 kann eine sichere Verbindung zwischen der Kapillare 5 und dem sie umgebenden Isolierteil 3 geschaffen werden, die frei von Hohlräumen ist und eine grosse Lebensdauer bei grosser Durchschlagsfestigkeit aufweist. Der Einschluss von Hohlräumen muss bei der Herstellung vermieden werden, und man muss vermeiden, dass sich Verbindungen innerhalb des Hochspannungsbauteils im Laufe der Zeit lösen und sich Hohlräume bilden, die zu Teilentladungen führen können.

Gegenüber Hochspannungsbauteilen mit integrierten Fasern, wie sie aus dem Stand der Technik bekannt sind, hat der Aufbau mit einer Kapillare 5 den grossen Vorteil, dass die Faser 4, respektive eine die Faser 4 umgebende Faserschutzhülle 7, bezüglich des Materials frei gewählt werden kann. Die Faser 4 oder der Fasertyp der Faser 4 kann also unabhängig von Materialien des Hochspannungsbauteils gewählt werden. Das Material der Kapillare 5 oder das Material der Kapillarenummantelung 8 kann auf guten mechanischen Schutz der Kapillare 5 und/oder auf gute Haftungseigenschaften mit dem umgebenden Material (Isolierteil 3) optimiert werden. Gegebenenfalls kann für eine weitere Verbesserung der Haftungseigenschaften in Haftvermittler (Primer) eingesetzt werden. Ein solcher kann vor der Einbettung der Kapillare 5 in das Isolierteil 3 auf die Zwischenschicht 8 aufgetragen werden.

Vorteilhaft ist das Hochspannungsbauteil derart ausgebildet, dass die Faser 4 auswechselbar ist. Die Faser 4 soll insbesondere auswechselbar sein, ohne dass das Isolierteil 3 verändert werden muss. Dies kann mittels der Kapillare 5 dadurch erreicht werden, dass das Schutzmedium 6 ausreichend niederviskos ist oder aus der Kapillare 5 ganz oder zumindest teilweise entfernbar ist, so dass eine ausreichend kleine Gleitreibung zwischen Kapillare 5 und Faser 4 wirkt und ein Herausziehen der kompletten Faser 4 aus der Kapillare 5 möglich ist. Eventuelle Verschlüsse oder Versiegelungen an den Enden der Kapillare müssen entfernbar sein. Und eine neue Faser 4 muss in die Kapillare 5, welche sich in dem Isolierteil 3 befindet, einführbar sein. Zur Erzeugung einer für das Herausziehen und/oder Einführen ausreichend kleinen Gleitreibung kann ein geeignetes Schutzmedium 6 oder auch eine gleitreibungsvermindernde Flüssigkeit, wie beispielsweise ein Öl oder Alkohol verwendet werden. Auch ein nicht zu kleiner Steigungswinkel der Kapillarenwendel dient einem vereinfachten Faserwechsel. Insbesondere kann das Einführen einer neuen Faser 4 in die Kapillare 5 dadurch vereinfacht werden, dass vor dem Entfernen der ursprünglichen Faser 4 die neue Faser 4 an einem Ende der ursprünglichen Faser 4 befestigt wird, beispielsweise durch Anspleissen, so dass mit einem Herausziehen der ursprünglichen Faser 4 die neue Faser 4 gleichzeitig in die Kapillare 5 hineingezogen wird.

Optische Fasern 4 weisen im allgemeinen eine Faserschutzhülle 7 (fiber coating) auf. Dieser besteht typischerweise aus einem Acrylat. Manche Fasern 4 weisen Faserschutzhüllen 7 aus einem hochtemperaturbeständigem Material wie Polyimid oder Teflon auf. In Versuchen hat sich gezeigt, dass im Falle einer Anordnung mit einer Kapillare 5 trotz Ausheiztemperaturen von etwa 150°C für die Silikon-Beschirmung 11,3 die gebräuchlicheren acrylatummantelten Fasern 4 einsetzbar sind. Spezielle Fasern sind oft nur mit einem Acrylat-Mantel 7, aber nicht mit einer speziellen hochtemperaturbeständigen Faserschutzhülle 7 erhältlich. Vorzugsweise und vorteilhaft werden darum acrylat-ummantelte Fasern 4 eingesetzt.

Fig. 3 zeigt eine weitere bevorzugte Ausführungsform des Erfindungsgegenstandes schematisch und geschnitten. Das Hochspannungsbauteil ist ein Hochspannungsisolator mit einer Beschirmung 11 und einem integrierten elektro-optischen oder piezo-optischen Spannungssensor 13. Zwischen den beiden mit je einer Armatur versehenen Enden 1,2 ist ein Isolationskörper 9 angeordnet. Dieser besteht aus einem Dielektrikum, vorzugsweise aus einem faserverstärkten Kunststoff. Der Isolationskörper 9 hat im wesentlichen die Form eines Hohlzylinders. Aussen auf dem Isolationskörper 9 und diesen umgebend ist die optionale Beschirmung 11 angeordnet. Zentral bezüglich der Längsachse des Hochspannungsisolators ist der elektro-optische oder piezo-optische Spannungssensor 13 angeordnet. Spiralförmig um den Spannungssensor 13 herum angeordnet ist die Kapillare 5 mit dem Schutzmedium 6 und der Faser 4 sowie gegebenenfalls mit einer Kapillarenummantelung 8, welche in Fig. 3 nicht dargestellt ist. Der Spannungssensor 13 kann vorteilhaft eine Zwischenschicht 10 aufweisen, wie sie in Fig. 2 dargestellt ist. Eine Detektionseinheit (nicht dargestellt) des Spannungssensors 13 kann vorteilhaft in einer Armatur des Hochspannungsbauteils angeordnet sein, insbesondere in einer auf Erdpotential angeordneten Armatur. Zur Herstellung des Hochspannungsbauteils wird vorteilhaft die die Faser 4 bereits enthaltende Kapillare 5 um den Spannungssensor 13 gewickelt.

Zwischen dem Isolationskörper 9 und dem Spannungssensor 13 ist eine Isolations-Füllung 12 angeordnet. Die Isolations-Füllung 12 dient hier als Isolierteil 3; in sie eingebettet ist die Kapillare 5. Die Isolations-Füllung 12 ist vorteilhaft eine Feststoff-Isolation, beispielsweise aus Polyurethan. Vorzugsweise wird der Spannungssensor 13 erst dann mit der Isolations-Füllung 12 umgeben, wenn die Kapillare bereits um den Spannungssensor 13 herum angeordnet ist.

Der Spannungssensor 13 kann vorteilhaft in einer Art ausgebildet sein, wie sie in der Offenlegungsschrift EP 0'682'261 A2 oder in der Offenlegungsschrift EP 0'907'084 A2 offenbart ist. Vorteilhaft kann die Faser 4 der Übertragung von Licht zum Sensor dienen. Im Falle eines Spannungssensors gemäss der genannten EP 0'907'084 A2 kann vorteilhaft die Lichtübertragung zwischen den Quarzen des Sensors mittels Fasern 4 in Kapillaren 5 stattfinden. Zusätzlich zum Spannungssensor 13 kann das Hochspannungsbauteil (beispielsweise das in Fig. 3 gezeigte, aber auch das in Fig. 1 gezeigte) noch einen optischen Stromsensor aufweisen (nicht dargestellt). Ein Stromsensor oder zumindest dessen Sensorkopf kann vorteilhaft am ersten Ende 1 oder auch am zweiten Ende 2 des Hochspannungsbauteils, aber auch dazwischen angeordnet sein. Die Übertragung von Licht des Sensors erfolgt vorteilhaft mittels der Faser 4 in der Kapillare 5. In K. Bohnert et al., Temperature and vibration insensitive fiber-optic current sensor, J. Lightwave Technology, 20(2), 267-276, (2002) sind verschiedene geeignete optische Stromsensoren offenbart.

Wenn ein Hochspannungsbauteil, das dem in Fig. 3 dargestellten ähnlich ist, keinen Spannungssensor enthalten soll, dann kann trotzdem die Kapillare 5 innerhalb eines Isolierteils 3 innerhalb des Isolierkörpers 9 angeordnet sein. Beispielsweise kann die Kapillare 5 mittels einer mechanischen Hilfsstruktur (nicht dargestellt) in eine ungefähr spulenartige Form gebracht werden und in ein Isolierteil 3, respektive eine Isolierfüllung 12 eingebracht werden.

Die weiter oben und im folgenden aufgeführten alternativen oder zusätzlichen Merkmale sind optional und untereinander sowie mit den in der Beschreibung dargestellten Ausführungsbeispielen beliebig kombinierbar.

Das Hochspannungsbauteil kann, wie in den Fig. 1 und 3 dargestellt, ein Hochspannungsisolator sein. Das Hochspannungsbauteil kann aber auch beispielsweise eine Hochspannungs-Durchführung, ein Hochspannungs-Ableiter oder ein Hochspannungs-Schalter sein. Das Hochspannungsbauteil kann vorteilhaft einen Stromsensor und einem Spannungssensor 13 aufweisen. Beispielsweise *sind* in der Offenlegungsschrift DE 100'05'164 A1,̅ verschiedene Hochspannungs-Durchführungen, Strom- und/oder Spannungssensoren und mehrere vorteilhafte Anordnungen von Strom- und/oder Spannungssensoren in Hochspannungsdurchführungen offenbart. In derartigen Hochspannungs-Durchführungen kann vorteilhaft eine optische Faser 4 und Kapillare 5 in der erfindungsgemässen Weise integriert werden. Das Hochspannungsbauteil muss nicht notwendigerweise eine optische Faser enthalten, sondern kann auch lediglich zur Aufnahme eine optischen Faser 4 in der Kapillare 5 geeignet sein. Die im Bereich der Hochspannungstechnik nominal auftretenden Spannungen liegen typischerweise zwischen 50 kV und 1000 kV, insbesondere bei etwa 75 kV, 125 kV, 175 kV, 240 kV, 550 kV und 800 kV.

Im Betriebsfall wird in den meisten Fällen das eine Ende 2,1 auf Erdpotential und das andere Ende 1,2 auf einem Hochspannungspotential liegen. Es sind aber auch Hochspannungsbauteile und Anordnungen denkbar, bei denen beide Enden 1,2 auf je einem Hochspannungspotential liegen, wobei dennoch zwischen den beiden Enden 1,2 ein Hochspannungspotential anliegt. Der Betriebsfall umfasst nicht nur die nominalen, im allgemeinen dauerhaft an dem Hochspannungsbauteil anliegenden Spannungen, sondern auch die im Falle von Störungen wie Kurzschlüssen auftretenden Spannungsspitzen, für die ein Hochspannungsbauteil ausgelegt ist.

An mindestens einem Ende 1,2 weist das Hochspannungsbauteil vorteilhaft mindestens eine Armatur auf. Diese kann der Aufnahme von Enden der Kapillare 5 und gegebenenfalls auch der Aufnahme von Enden der Faser 4 dienen, und innerhalb und/oder ausserhalb an der mindestens einen Armatur können auch Anschlüsse für weitere elektrische oder Faser-Verbindungen vorgesehen sein. Derartige Anschlüsse können Stecker- oder Spleiss-Verbindungen sein. An mindestens einem Ende 1,2 ist vorteilhaft mindestens ein Anschluss für eine Hochspannung und/oder für mindestens eine Glasfaser vorgesehen, welcher vorteilhaft in eine Armatur integtriert ist.

Die Enden 1,2 können mit den geometrischen Enden des Hochspannungsbauteils übereinstimmen, müssen dies aber nicht. Zwischen den Enden 1,2, welche dadurch gegeben sind, dass zwischen ihnen ein Hochspannungspotential anliegt und dass sich die Faser (mindestens) zwischen ihnen erstreckt, muss nicht die maximale am Hochspannungsbauteil anliegende Spannung anliegen; es kann auch eine Teilspannung sein.

Das Isolierteil 3 kann irgendein sich zwischen den beiden Enden erstreckendes Dielektrikum sein, in welchem die Kapillare 5 integriert ist. Beispielsweise kann er ein stangenförmiger (Fig. 1) oder rohrförmiger (Fig. 3) dielektrischer Körper sein. Oder auch eine Flüssigkeit oder ein Gas. Er kann beispielsweise ein Isolatorkörper 9, eine Beschirmung 11 (Fig. 1) oder eine Isolationsfüllung 12 (Fig. 3) sein.

Die optische Faser 4 dient der Übertragung von Signalen. Dies kann im Bereich der Kommunikation und Tekemommunikation sein, aber auch im Bereich Sicherheitstechnik oder Leittechnik und insbesondere im Bereich der Sensorik. Speziell vorteilhaft ist die Übertragung von Licht, insbesondere von polarisiertem Licht, von Strom-, Spannungs- und/oder TemperaturSensoren. Die Faser 4 weist vorteilhaft eine Faserschutzhülle 7 auf; es ist aber auch denkbar, Fasern 4 ohne Faserschutzhülle 7 einzusetzen. Vorzugsweise werden polarisationserhaltende Fasern 4, insbesondere Fasern 4, die aufgrund ihrer Geometrie polarisationserhaltend sind, eingesetzt. In J. Noda et al., Polarisation maintaining fibers and their applications, J. Lightwave Technology, 4(8), 1071-1089 (1986) sind verschiedene polarisationserhaltende Fasern offenbart, die in einem erfindungsgemässen Hochspannungsbauteil einsetzbar sind. Bevorzugt werden insbesondere Fasern mit elliptischem Kern, Fasern mit einem inneren elliptischen Mantel, Bowtie-Fasern oder Panda-Fasern eingesetzt.

Die Faser 4 ist solcherart in dem Hochspannungsbauteil angeordnet, dass im Betriebsfall ein Teil der Faser 4 gegenüber einem anderen Teil der Faser 4 auf einem Hochspannungspotential liegt. Vorteilhaft beschreibt die Faser 4 und die Kapillare 5 einen im wesentlichen wendelförmigen Weg von dem ersten Ende 1 zu dem zweiten Ende 2. Eine derartige Anordnung verringert die Einwirkung thermo-mechanischer Kräfte auf die Kapillare 5. Ausserdem wird, insbesondere bei kleinen Ganghöhen und somit kleinen Anstiegswinkeln der von der Kapillare 5 beschriebenen Wendel, möglichst kleiner als 90° oder kleiner als 60°, der von dem Schutzmedium 6 aufzufüllende Abstand zwischen dem Äusseren der Faser 4 und dem Inneren der Kapillare 5 in Richtung parallel zu den elektrischen Feldlinien klein. Dadurch wird eine hohe Grenzfeldstärke erreicht, oberhalb welcher Teilentladungen innerhalb der Kapillare 5 auftreten könnten. Die Faser 4 kann sich auch über eines oder beide der Enden 1 ,2 hinaus erstrecken. Statt einer einzigen Faser 4 können auch mehrere Fasern 4 in einer Kapillare 5 angeordnet sein; vorteilhaft als Redundanz, und/oder auch zur Übertragung mehrerer verschiedener Signale, beispielsweise je ein Sensorsignal von drei Wechselstromphasen. Der Durchmesser einer Faser 4 liegt typischerweise im Bereich von 50 µm bis 200 µm, meistens zwischen 75 µm und 140 µm.

Die Kapillare 5 *ist* vorteilhaft aus Quarzglas. Vorteilhaft weist die Kapillare im wesentlichen den gleichen thermischen Ausdehnungskoeffizienten auf wie die Faser 4. Bevorzugt weist die Kapillare 5 eine oben beschriebene Kapillarenummantelung 8 auf. Vorteilhaft ist die Kapillare 5 auf der äusseren Oberfläche des Isolationskörpers 9 oder in diesem drin angeordnet, insbesondere an einer innerer Oberfläche des Isolierkörpers 9. Es kann vorteilhaft eine Zwischenschicht 10 zwischen Kapillare 5 und Isolationskörper 9 angeordnet sein. Es können auch, aus Redundanzgründen oder für die Übertragung grösserer Datenvolumina, mehrere Kapillare in einem Hochspannungsbauteil integriert sein. Typische Kapillaren-Innen- und Aussendurchmesser (ohne eine Kapillarenummantelung 8) betragen einige 100 µm, beispielsweise 200 µm bis 600 µm. Dabei beträgt die Wandstärke typischerweise 20 µm bis 80 µm. Vorteilhaft kann die Kapillare an ihren Enden (gasdicht) verschlossen sein. Vorteilhaft kann das Hochspannungsbauteil mehrere Kapillaren 5 aufweisen. Dies kann beispielsweise aus Redundanzgründen, und/oder auch zur Übertragung verschiedener Signale der Fall sein. Insbesondere können zur Übertragung von Sensorsignalen vorteilhaft drei oder sechs Kapillaren 5 vorgesehen sein, wobei ein Satz von drei Kapillaren 5 dann der Aufnahme von je einer oder mehrerer Fasern 4 zur Übertragung von Sensorsignalen von verschiedenen Wechselstromphasen dient.

Das Schutzmedium 6 ist ein gasförmiges oder flüssiges Dielektrikum. Vorteilhaft hat das Schutzmedium 6 einen kleinenthermischen Ausdehnungskoeffizienten. Bevorzugt ist es trockener Stickstoff oder auch Silikon-Öl oder SF₆. Das Schutzmedium 6 kann vor oder vorzugsweise nach der Faser 4 in die Kapillare eingebracht werden. In besonderen Fällen kann auch Luft oder Vakuum als mögliches Schutzmedium 6 dienen. Bei nicht ungewöhnlich hoher Luftfeuchtigkeit kann die Umgebungsluft als Schutzmedium 6 dienen, und die Kapillare 5 kann unverschlossen sein. Das Schutzmedium dient zur Vermeidung von Teilentladungen innerhalb der Kapillare.

Die Kapillarenummantelung 8 kann mehrschichtig ausgebildet sein. Die Kapillare 5 kann vor oder nach dem Anordnen der Kapillare 5 in dem Isolierteil 3 mit der Kapillarenummantelung 8 versehen werden. Die Wandstärke oder Dicke einer Kapillarenummantelung 8 beträgt typischerweise einige 10 µm, beispielsweise zwischen 20 µm und 80 µm. Der Isolationskörper 9 kann stabförmig, rohrförmig, prismenförmig, aber kann auch gekrümmt sein. Es ist möglich, dass der Isolationskörper 9 gleichzeitig der Isolierteil 3 ist. Vorteilhaft kann der Isolationskörper 9 kann mit einer Nut versehen sein, in welcher die Kapillare 5 verlegt ist. Details zu einer derartigen Anordnung können der genannten Schrift US 5'594'827 entnommen werden.

Die genannten Merkmale können gemeinsam oder auch einzeln oder in beliebiger Kombination vorteilhaft sein.

### Bezugszeichenliste

- 1: erstes Ende
- 2: zweites Ende
- 3: Isolierteil
- 4: optische Faser
- 5: Kapillare
- 6: Schutzmedium
- 7: Faserschutzhülle
- 8: Kapillarenummantelung
- 9: Isolationskörper, Isolatorstange
- 10: Zwischenschicht
- 11: Beschirmung
- 12: Isolations-Füllung
- 13: Spannungssensor

## Patentansprüche

1. Hochsparinungs *bautei*/ *mit einem Hochspannungssensor* (13) *und* mit einem ersten Ende (1) und einem zweiten Ende (2), wobei im Betriebsfall das erste Ende (1) gegenüber dem zweiten Ende (2) auf einem Hochspannungspotential liegt,
mit einem Isolierteil (3; 9,1 1 ,12), welches zwischen dem ersten Ende (1) und dem zweiten Ende (2) angeordnet ist, und
mit mindestens einer polarisationserhaltenden *optischen* Faser (4), welche in den Hochspannungssensor (13) integriert ist und sich von dem ersten Ende (1) zu dem zweiten Ende (2) erstreckt, der Hochspannungsensor (13) elektro-optisch, oder piezo-optisch arbeitet,
und das hochspannungsbanteil mindestens eine Kapillare (5) aufweist, welche sich von dem ersten Ende (1) zu dem zweiten Ende (2) erstreckt und innerhalb des Isolierteils (3; 9,11,12) angeordnet ist, wobei der Innendurchmesser der Kapillare (5) grösser ist als der Aussendurchmesser der Faser (4), wobei innerhalb der Kapillare (5) die Faser (4) angeordnet ist, die Kapillare (5) ein Schutzmedium (6) enthält zur Erzielung einer für den Betriebsfall geeigneten Durchschlagsfestigkeit in der Kapillare (5),
die Kapillare (5) derart ausgebildet und in dem Isolierteil (3; 9,11,12) angeordnet ist, dass thermo-mechanischer Stress, der während eines Aushärtevorgangs des Isolierteils (3; 9,11,12) oder im Betriebsfall von dem Isolierteil (3; 9,1 1,12) auf sie ausgeübt wird, sie unbeschädigt lässt, wobei die Kapillare (5) aus einem Quarzglas mit einem Ausdehnungskoeffizienten gleich dem der Faser (4) gewählt wird und zum mechanischen Schutz und verbesserten Haftungsvermögen aussen von einer Kapillarenummantelung (8) umgeben ist, und
die Kapillare (5) innerhalb des Isolierteils (3; 9,11,12) angeordnet und *eingebettet* wird.

2. Hochspannungs *bautei*/ nach Anspruch 1, **dadurch gekennzeichnet, dass** die polarisationserhaltende Faser (4) eine Faser mit elliptischem Kern, eine Faser mit einem inneren elliptischen Mantel, eine Bowtie-Faser oder eine Panda-Faser, ist.

3. Hochspannungs *bauteil* nach einem der vorhergehenden Ansprüche, **dadurch gekennzeichnet, dass** die Faser (4) eine Faserschutzhülle (7) aufweist.

4. Hochspannungs *bauteil* nach einem der vorhergehenden Ansprüche, **dadurch gekennzeichnet, dass** die Faser (4) auswechselbar ist, ohne dass das Isolierteil (3; 9,1 1,12) dafür verändert werden müsste.

5. Hochspannungs *bauteil* nach einem der vorhergehenden Ansprüche, wobei das Hochspannungssensor (13) einen sich von dem ersten Ende (1) zu dem zweiten Ende (2) erstreckenden Isolationskörper (9) aufweist, **dadurch gekennzeichnet, dass** die Kapillare (5) spiralförmig entlang des Isolationskörpers (9) angeordnet ist, und insbesondere dass der Isolationskörper (9) von einer Zwischenschicht (10) ummantelt ist und die Zwischenschicht (10) zwischen dem Isolationskörper (9) und der Kapillare (5) angeordnet ist.

6. Hochspannungs *bautei*/ nach einem der vorhergehenden Ansprüche, **dadurch gekennzeichnet, dass** der Hochspannungssensor (13) *zusätzlich* einen Stromsensor *aufweist*.

7. Hochspannungs *bauteil* nach einem der vorhergehenden Ansprüche, **dadurch gekennzeichnet, dass** das Isolierteil (3; 9,11,12) eine Beschirmung (11) oder eine Isolations-Füllung (12) und/oder ein Isolationskörper (9) ist.

8. Hochspannungs *bauteil* nach einem der vorhergehenden Ansprüche, **dadurch gekennzeichnet, dass** das Hochspannungs *bauteil* ein Hochspannungs-Isolator, eine Hochspannungs-Durchführung, ein Hochspannungs-Ableiter oder ein Hochspannungs-Schalter ist.

9. Verfahren der Herstellung eines Hochspannungs *bauteils mit einem Hochspannungssensor* (13) *und* mit einem ersten Ende (1) und einem zweiten Ende (2), wobei im Betriebsfall das erste Ende (1) gegenüber dem zweiten Ende (2) auf einem Hochspannungspotential liegt, und
mit einem Isolierteil (3; 9,11,12), welches zwischen dem ersten Ende (1) und dem zweiten Ende (2) angeordnet wird,
eine Kapillare (5) derart ausgebildet und in dem Isolierteil (3;11,12) angeordnet wird, dass thermo-mechanischer Stress, der während eines Aushärtevorgangs des Isolierteils (3; 9,11,12) oder im Betriebsfall von dem Isolierteil (3; 9,11,12) auf die Kapillare (5) ausgeübt wird, sie unbeschädigt lässt,
- wobei zwischen dem ersten Ende (1) und dem zweiten Ende (2) innerhalb des Isolierteils (3; 9,11,12) die mindestens eine Kapillare (5) zur Aufnahme mindestens einer polarisationserhaltenden *optischen* Faser (4) innerhalb des Isolierteils (3; 9,11,12) angeordnet und eingebettet wird, mindestens die eine Faser (4) in die Kapillare (5) eingebracht wird,
- in die Kapillare ein Schutzmedium (6) eingebracht wird zur Erzielung einer für den Betriebsfall geeigneten Durchschlagfestigkeit in der Kapillare (5),
die Kapillare (5) aus Quarzglas mit einem Ausdehnungskoeffizienten gleich dem der Faser (4) zum mechanischen Schutz und verbessertem Haftungsvermögen äusserlich mit einer Kapillarenummantelung (8) versehen wird.

10. Herstellungsverfahren nach Anspruch 9 , wobei der Hochspannungssensor (13) einen sich von dem ersten Ende (1) zu dem zweiten Ende (2) erstreckenden Isolationskörper (9) aufweist, **dadurch gekennzeichnet, dass** die Kapillare (5) spiralförmig entlang des Isolationskörpers (9) angeordnet wird, der Isolationskörper (9) mit einer Zwischenschicht (10) ummantelt wird und dann die Kapillare (5) spiralförmig derart entlang des mit der Zwischenschicht (10) ummantelten Isolationskörpers (9) angeordnet wird, dass die Zwischenschicht (10) zwischen der Kapillare (5) und dem Isolationskörper (9) angeordnet ist.

11. Herstellungsverfahren nach einem der Ansprüche 9 oder 10, **dadurch gekennzeichnet, dass** die Faser (4) in die Kapillare (5) eingebracht wird, nachdem die Kapillare (5) innerhalb des Isolierteils (3; 9,11,12) angeordnet wird, und/oder dass die Faser (4) derart in die Kapillare (5) eingebracht wird, dass sie auswechselbar ist.

## Claims

1. High-voltage component having a high-voltage sensor (13) and having a first end (1) and a second end (2), with the first end (1) being at a high-voltage potential with respect to the second end (2) during operation,
having an insulating part (3; 9, 11, 12) which is arranged between the first end (1) and the second end (2), and
having at least one polarisation-maintaining optical fibre (4), which is integrated in the high-voltage sensor (13) and extends from the first end (1) to the second end (2), and with the high-voltage sensor (13) operating electrooptically or piezooptically, and with the high-voltage component having at least one capillary (5) which extends from the first end (1) to the second end (2) and is arranged within the insulating part (3; 9, 11, 12), with the internal diameter of the capillary (5) being greater than the external diameter of the fibre (4), with the fibre (4) being arranged within the capillary (5) and the capillary (5) containing a protection medium (6) in order to achieve a dielectric strength which is suitable for operation in the capillary (5), with capillary (5) being designed and arranged in the insulating part (3; 9, 11, 12) such that thermomechanical stress which is exerted thereon by the insulating part (3; 9, 11, 12) during a curing process of the insulating part (3; 9, 11, 12) or during operation leaves it undamaged, with the capillary (5) being chosen from a quartz glass having a coefficient of expansion which is equal to that of the fibre (4) and being surrounded externally by a capillary sheath (8) for mechanical protection and for a better adhesion capability, and
with the capillary (5) being arranged and embedded within the insulating part (3; 9, 11, 12).

2. High-voltage component according to Claim 1, **characterized in that** the polarisation-maintaining fibre (4) is a fibre with an elliptical core, a fibre with an inner elliptical envelope, a bow-tie fibre or a panda fibre.

3. High-voltage component according to one of the preceding claims, **characterized in that** the fibre (4) has a fibre protective coating (7).

4. High-voltage component according to one of the preceding claims, **characterized in that** the fibre (4) can be replaced without having to change the insulating part (3; 9, 11, 12) to do so.

5. High-voltage component according to one of the preceding claims, with the high-voltage sensor (13) having an insulation body (9) which extends from the first end (1) to the second end (2), **characterized in that** the capillary (5) is arranged in a spiral shape along the insulation body (9), and in particular that the insulation body (9) is sheathed by an intermediate layer (10), and the intermediate layer (10) is arranged between the insulation body (9) and the capillary (5).

6. High-voltage component according to one of the preceding claims, **characterized in that** the high-voltage sensor (13) additionally has a current sensor.

7. High-voltage component according to one of the preceding claims, **characterized in that** the insulating part (3; 9, 11, 12) is a screen (11), or an insulation filling (12), and/or an insulation body (9).

8. High-voltage component according to one of the preceding claims, **characterized in that** the high-voltage component is a high-voltage insulator, a high-voltage bushing, a high-voltage output, or a high-voltage switch.

9. Method for production of a high-voltage component having a high-voltage sensor (13) and having a first end (1) and a second end (2), with the first end (1) being at a high-voltage potential with respect to the second end (2) during operation, and
having an insulating part (3; 9, 11, 12) which is arranged between the first end (1) and the second end (2),
a capillary (5) is formed and is arranged in the insulating part (3; 11, 12) such that thermomechanical stress which is exerted by the insulating part (3; 9, 11, 12) on the capillary (5) during a curing process of the insulating part (3; 9, 11, 12) or during operation leaves the capillary (5) undamaged.
- with the at least one capillary (5) being arranged and embedded between the first end (1) and the second end (2) within the insulating part (3; 9, 11, 12) in order to hold at least one polarisation-maintaining optical fibre (4) within the insulating part (3; 9, 11, 12), with at least one fibre (4) being introduced into the capillary (5),
- with a protection medium (6) being introduced into the capillary in order to achieve a dielectric strength which is suitable for operation in the capillary (5),
- the capillary (5) is provided externally with a capillary sheath (8) and is composed of quartz glass with a coefficient of expansion equal to that of the fibre (4), for mechanical protection and a better adhesion capability.

10. Production method according to Claim 9, with the high-voltage sensor (13) having an insulation body (9) which extends from the first end (1) to the second end (2), **characterized in that** the capillary (5) is arranged in a spiral shape along the insulation body (9), the insulation body (9) is sheathed with an intermediate layer (10), and the capillary (5) is then arranged in a spiral shape along the insulation body (9), which is sheathed with the intermediate layer (10), such that the intermediate layer (10) is arranged between the capillary (5) and the insulation body (9).

11. Production method according to one of Claims 9 or 10, **characterized in that** the fibre (4) is introduced into the capillary (5) after the capillary (5) has been arranged within the insulating part (3; 9, 11, 12), and/or **in that** the fibre (4) is introduced into the capillary (5) such that it can be replaced.

## Revendications

1. Composant à haute tension doté d'une sonde (13) de haute tension, d'une première extrémité (1) et d'une deuxième extrémité (2), la première extrémité (1) étant en fonctionnement placée à un potentiel de tension plus élevé que la deuxième extrémité (2), le composant à haute tension présentant
une partie isolante (3; 9, 11, 12) disposée entre la première extrémité (1) et la deuxième extrémité (2),
au moins une fibre optique (4) recevant une polarisation, intégrée dans la sonde (13) de haute tension et s'étendant entre la première extrémité (1) et la deuxième extrémité (2),
la sonde (13) de haute tension travaillant électro-optiquement ou piézo-optiquement et le composant à haute tension présentant au moins un capillaire (5) s'étendant de la première extrémité (1) à la deuxième extrémité (2) et disposé à l'intérieur de la partie isolante (3; 9, 11, 12), le diamètre intérieur du capillaire (5) étant supérieur au diamètre extérieur de la fibre (4), la fibre (4) étant disposée à l'intérieur du capillaire (5), le capillaire (5) contenant un fluide protecteur (6) permettant d'obtenir dans le capillaire (5) une tenue au claquage qui convient pour l'utilisation,
le capillaire (5) étant configuré et disposé dans la partie isolante (3; 9, 11, 12) de telle sorte que les contraintes thermomécaniques qui sont exercées sur lui pendant une opération de durcissement de la partie isolante (3; 9, 11, 12) ou en utilisation par la partie isolante (3; 9, 11, 12) le laissent intact, le capillaire (5) sélectionné étant en un verre de quartz dont le coefficient de dilatation est identique à celui de la fibre (4) et étant entouré par une enveloppe extérieure (8) de capillaire qui le protège mécaniquement et qui améliore sa capacité d'adhérence,
le capillaire (5) étant disposé et incorporé à l'intérieur de la partie isolante (3; 9, 11, 12).

2. Composant à haute tension selon la revendication 1, **caractérisé en ce que** la fibre (4) qui reçoit une polarisation est une fibre à âme elliptique, une fibre à enveloppe elliptique intérieure, une fibre dite en papillon ou une fibre dite en panda.

3. Composant à haute tension selon l'une des revendications précédentes, **caractérisé en ce que** la fibre (4) présente une enveloppe de protection (7).

4. Composant à haute tension selon l'une des revendications précédentes, **caractérisé en ce que** la fibre (4) peut être remplacée sans qu'il faille pour ce faire modifier la partie isolante (3; 9, 11, 12).

5. Composant à haute tension selon l'une des revendications précédentes, le composant à haute tension (13) présentant un corps isolant (9) qui s'étend de la première extrémité (1) à la deuxième extrémité (2), **caractérisé en ce que** le capillaire (5) est disposé en spirale le long du corps isolant (9) et en particulier **en ce que** le corps isolant (9) est enveloppé par une couche intermédiaire (10) et la couche intermédiaire (10) est disposée entre le corps isolant (9) et le capillaire (5).

6. Composant à haute tension selon l'une des revendications précédentes, **caractérisé en ce que** la sonde (13) de haute tension présente de plus une sonde de courant.

7. Composant à haute tension selon l'une des revendications précédentes, **caractérisé en ce que** la partie isolante (3; 9, 11, 12) est un écran (11), une charge isolante (12) et/ou un corps isolant (9).

8. Composant à haute tension selon l'une des revendications précédentes, **caractérisé en ce que** le composant à haute tension est un isolateur à haute tension, un passage à haute tension, un évacuateur de haute tension ou un commutateur de haute tension.

9. Procédé de fabrication d'un composant à haute tension doté d'une sonde (13) de haute tension, d'une première extrémité (1) et d'une deuxième extrémité (2), la première extrémité (1) étant placée à un potentiel de tension plus élevé que la deuxième extrémité (2) en utilisation, le composant à haute tension présentant
une partie isolante (3; 9, 11, 12) disposée entre la première extrémité (1) et la deuxième extrémité (2),
un capillaire (5) configuré et disposé dans la partie isolante (3; 9, 11, 12) de telle sorte que les contraintes thermomécaniques qui sont exercées sur le capillaire (5) pendant l'opération de durcissement de la partie isolante (3; 9, 11, 12) ou en utilisation par la partie isolante (3; 9, 11, 12) le laissent intact,
le ou les capillaires (5) étant disposés et incorporés à l'intérieur de la partie isolante (3; 9, 11, 12) entre la première extrémité (1) et la deuxième extrémité (2) pour recevoir au moins une fibre optique (4) à l'intérieur de la partie isolante (3; 9, 11, 12), la ou les fibres (4) étant placées dans le capillaire (5),
un fluide protecteur (6) étant placé dans le capillaire pour obtenir dans le capillaire (5) une tenue au claquage qui convient pour le fonctionnement,
le capillaire (5) en un verre de quartz dont le coefficient de dilatation est identique à celui de la fibre (4) étant doté extérieurement d'une enveloppe (8) de capillaire qui le protège mécaniquement et qui améliore sa capacité d'adhérence.

10. Procédé de fabrication selon la revendication 9, dans lequel la sonde (13) de haute tension présente un corps isolant (9) qui s'étend de la première extrémité (1) à la deuxième extrémité (2), **caractérisé en ce que** le capillaire (5) est disposé en spirale le long du corps isolant (9), **en ce que** le corps isolant (9) est enveloppé dans une couche intermédiaire (10) et **en ce que** le capillaire (5) est ensuite disposé en spirale le long du corps isolant (9) enveloppé par la couche intermédiaire (10) de telle sorte que la couche intermédiaire (10) soit disposée entre le capillaire (5) et le corps isolant (9).

11. Procédé de fabrication selon l'une des revendications 9 ou 10, **caractérisé en ce que** la fibre (4) est placée dans le capillaire (5) après que le capillaire (5) a été disposé à l'intérieur de la partie isolante (3; 9, 11, 12) et/ou **en ce que** la fibre (4) est placée dans le capillaire (5) de manière à pouvoir être remplacée.
